# EUROPEAN PATENT APPLICATION

(11) **EP 1 744 549 A1**
(43) Date of publication of application: **17.01.2007**
(21) Application number: 06113239.5
(22) Date of filing: 27.04.2006
(51) Int. Cl.: H04N 5/44

(54) **Receiving apparatus**

(30) Priority: 15.07.2005 JP 2005207797
(71) Applicant: KABUSHIKI KAISHA TOSHIBA, Tokyo 105-8001 (JP)
(72) Inventor: Sugimoto, Shigemitsu Toshiba Corporation, Minato-ku Tokyo 1005-8001 (JP)
(74) Representative: Henkel, Feiler & Hänzel

(57) **Abstract**

The invention aims at providing a receiving apparatus with which a user can see and listen to a part of a program which he/she wants to enjoy without imposing a burden on him/her. A CPU generates a list picture (130) having information, on a musical name and a channel number, selected from program element information on a musical name and an artist name of a radio broadcasting program, and displays the list picture thus generated as a sound reception picture (100) on a displaying portion. Since a list of musical names of other channels not being received is displayed in the list picture (130), a user can listen to a piece of music to which he/she desires to listen by selecting a channel of this piece of music by operating an operation portion.

## Description

The present application is based on Japanese patent application No. 2005-207797, the entire contents of which are incorporated herein by reference.

### BACKGROUND OF THE INVENTION

### Field of the Invention

The present invention relates to a receiving apparatus for receiving digital broadcastings.

### Description of Related Art

A television/radio receiving apparatus which is easy to carry and a broadcasting system aiming at such a portable receiving apparatus have been developed, and dedicated broadcasting programs have also started to be broadcasted. In order to make such a receiving apparatus easy to carry, the receiving apparatus has been miniaturized.

In such a portable receiving apparatus, its screen has also been miniaturized. Hence, it is difficult to display all the detailed program information on the screen in a form as described in a newspaper. As a result, it is difficult for a user to find out a program which the user wants to enjoy.

In the light of such circumstances, a digital broadcasting receiving apparatus has been proposed with which a position of a program currently received can be seen, in an overall program guide, as disclosed in the Japanese Patent Kokai No. 2005-80282**.**

In this digital broadcasting receiving apparatus, an Electronic Program Guide (EPG) screen, on which an EPG is displayed, displays an image of a program being currently received in an image display area, EPG program information having titles in an EPG display area, and a position of a program currently received in the overall program guide in a mini map display area.

However, the conventional digital broadcasting-receiving apparatus displays only the titles for other channels. Hence, where a piece of music which a user wants to enjoy is broadcasted in another channel, the user does not take notice of the broadcasting of this piece of music, and thus may miss listening to it in some cases. In addition, it is troublesome for the user to frequently switch a channel over to another one so as not to miss listening to such a piece of music, or to see a program guide of a newspaper, etc..

### SUMMARY OF THE INVENTION

In the light of the foregoing, it is an object of the present invention to provide a receiving apparatus with which a user can see and listen to a part of a program which the user wants to enjoy without imposing a burden on him/her.

According to an aspect of the present invention, there is provided a receiving apparatus including: a receiving portion for receiving program element information on a plurality of programs currently broadcasted; a displaying portion for displaying thereon element information on a program currently seen and listened, and simultaneously element information on programs not currently seen and listened in a form of a list, respectively, in accordance with the program element information received from the receiving portion; and a display controlling portion for updating and displaying the element information displayed on the displaying portion at an appropriate time.

The receiving portion may receive program element information on a plurality of musical programs currently broadcasted; the displaying portion may display thereon element information, containing a broadcasting station, a musical name, and an artist name, on a musical program currently seen and listened, and at least one of a musical name, an artist name, and a program name from element information on a musical program not currently seen and listened in a form of a list; and the display controlling portion, when the element information displayed in the form of the list is updated, may switch a displayed element information and display the updated element information at an appropriate time.

The display controlling portion may display a predetermined mark for the element information, corresponding to a program currently seen and listened, among the element information displayed in the form of the list.

The display controlling portion may select the at least one of the musical name, the artist name, and the program name and display the at least one thus selected on the display portion in accordance with an instruction supplied from the outside.

The display controlling portion may periodically change the element information displayed in the form of the list on the displaying portion.

The display controlling portion may scroll and display the element information list displayed in the form of the list on the displaying portion.

The receiving portion may receive a video signal or a sound signal of a program selected among a plurality of programs currently broadcasted.

According to the present invention, a user can see and listen to a portion, which is to his/her taste, of a program without imposing a burden on him/her.

### BRIEF DESCRIPTION OF THE DRAWINGS

**FIG. 1** is a view showing a schematic construction of a receiving system according to an embodiment of the present invention;
**FIG. 2** is a block diagram showing an internal configuration of a receiving apparatus according to the embodiment of the present invention;
**FIG. 3** is a plan view showing details of an operation portion shown in **FIG.** 1;
**FIG. 4** is a diagram showing a flow of a digital program-broadcasting signal;
**FIGS. 5A** and **5B** are respectively diagrams explaining generation of a sound reception picture;
**FIGS. 6A** and **6B** are respectively diagrams explaining selection of a piece of music;
**FIGS. 7A** and **7B** are respectively diagrams explaining switching of a displayed item; and
**FIG. 8** is a diagram showing another example of a sound reception picture.

### DETAILED DESCRIPTION OF PREFERRED EMBODIMENTS

Hereinafter, an embodiment of the present invention will be described in detail with reference to the accompanying drawings.

### Construction of System

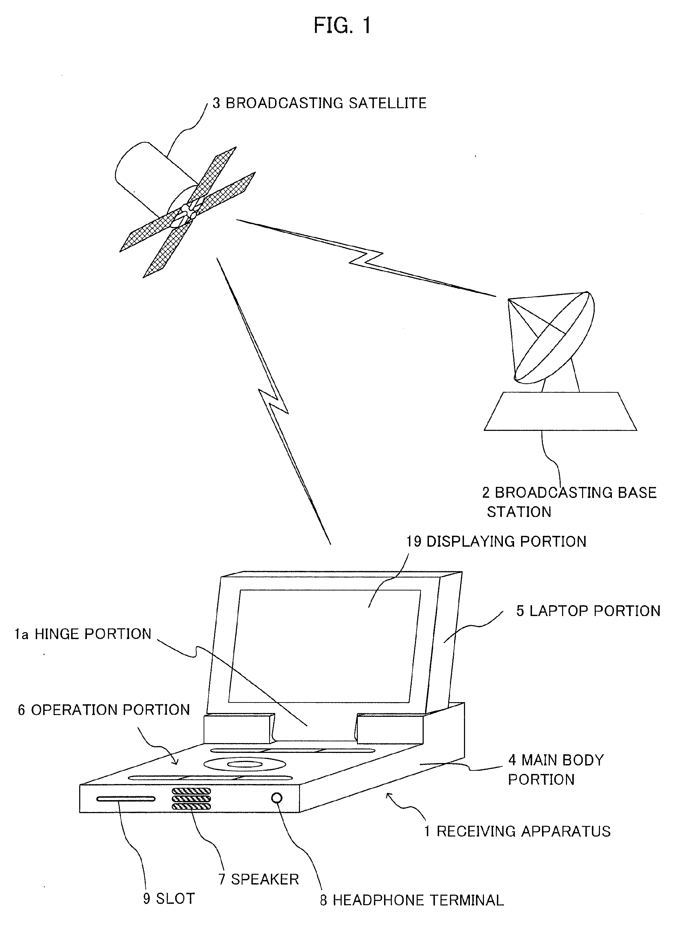

**FIG. 1** shows a schematic construction of a receiving system according to an embodiment of the present invention. The receiving system is schematically constituted by a broadcasting base station **2** which is installed on the ground and which can transmit a plurality of digital broadcastings such as a television program broadcasting and a radio program broadcasting, and a receiving apparatus **1** which receives a broadcasting electric wave from the broadcasting base station **2** via a broadcasting satellite **3** located in a space.

It should be noted that while **FIG. 1** shows an example when the satellite broadcasting is received, the receiving apparatus **1** of the present invention is not limited thereto. Thus, one which receives ground wave broadcastings, one which receives broadcastings through a transmission medium such as a cable, one which receives bidirectionally broadcastings, or the like may also be adopted.

With the receiving apparatus **1**, a user can select a program which he/she wants to enjoy among a plurality of broadcastings, and can see and listen to the selected program. The receiving apparatus **1** includes a main body portion **4** having an antenna, an electronic circuit and the like built therein, and a laptop portion **5** which is provided closeably in an upper portion of the main body portion **4** through a hinge portion **1a.**

The main body portion **4** is provided with an operation portion 6 including various kinds of switches on its upper surface. Also, the main body portion 4 is provided with a speaker **7,** a headphone terminal **8,** and a slot **9** into which a memory card as will be described later is inserted on its front. Incidentally, the speaker **7** and the headphone terminal **8** constitute a sound outputting portion.

The laptop portion **5** includes a displaying portion **19** such as a liquid crystal display device, or an organic EL display device.

When the user desires to see and listen to a television program, the display portion **19** displays thereon a program image, and the sound outputting portion outputs a program sound. On the other hand, when the user desires to listen to a radio program, the sound outputting portion outputs a program sound, and at the same time, the displaying portion **19** displays thereon information or the like on the contents of the program and pieces of music currently broadcasted. Whether a television broadcasting or a radio broadcasting is selected is determined by operating the operation portion **6.**

### (Internal Configuration of Receiving Apparatus 1)

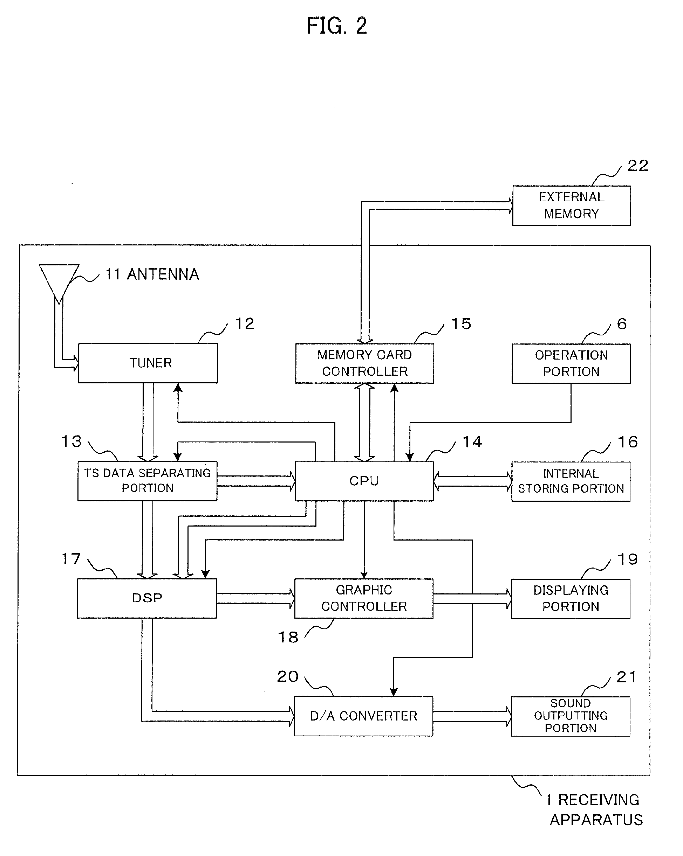

**FIG. 2** is a block diagram showing an internal configuration of the receiving apparatus 1. The receiving apparatus **1** includes an antenna **11,** a tuner **12,** a transport stream (TS) data-separating portion **13,** a CPU **14,** a memory card controller **15,** an internal storing portion **16,** a digital signal processor (DSP) **17,** a graphic controller **18,** a displaying portion **19,** a D/A converter **20,** and a sound outputting portion **21.**

The antenna **11** receives thereat a broadcasting electric wave, about a satellite broadcasting program, which is outputted from the broadcasting base station **2** and transmitted via the broadcasting satellite **3.** Also, the antenna **11** converts the broadcasting electric wave received thereat into an electrical signal and transmits the resulting electrical signal to the tuner **12.**

The tuner **12** selects necessary data from a digital program-broadcasting signal transmitted thereto through the antenna **11,** and transmits the necessary data thus selected to the TS data separating portion **13.**

The TS data separating portion **13** separates the digital program-broadcasting signal received thereat from the tuner **12** into video/sound data on a program image and a program sound, and management information data such as EPG data and management data. Also, the TS data-separating portion **13** transmits the management information data and the video/sound data to the CPU **14** and the DSP **17,** respectively.

The CPU **14** manages the control for the functions in the receiving apparatus **1.** Thus, the CPU **14** transmits signals to the constituent portions to instruct the constituent portions to perform the various kinds of operations, respectively. In addition, the CPU **14** performs the control for the transmission of the data during storage and reading of the received management information data in and from the internal storing portion **16.**

The memory card controller **15** controls a memory card or the like as an external memory **22,** and performs the reading and writing of the program data which is recorded with image and sound from and to the external memory **22.**

The internal storing portion **16** is used to store a program which the CPU **14** is instructed to execute in order to drive the receiving apparatus **1,** temporarily store the various kinds of parameters, the management information data, and the like which are used in the program, and store the program data which is recorded with image and sound. More specifically, a ROM, a RAM, an HDD or the like corresponds to the internal storing portion **16.**

The DSP **17** executes arithmetic operation processing for the video/sound data which is received from the TS data separating portion **13.** Also, the DSP **17** transmits the video data and the sound data to the graphic controller 18 and the D/A converter **20,** respectively.

The graphic controller **18** processes the video data received from the DSP **17** so that the displaying portion **19** can display thereon the resulting data. Also, the graphic controller **18** transmits the resulting data to the displaying portion **19.**

The displaying portion **19** displays the video data received from the graphic controller **18** on its monitor. The image to be displayed is an image of the television program from the satellite broadcasting, character information on a sound program, information on the apparatus setting for the receiving apparatus **1,** or the like.

The D/A converter **20** converts the sound data received from the DSP **17** from digital data into analog data. Also, the D/A converter **20** transmits the resulting analog sound data to the sound-outputting portion **21.**

The sound-outputting portion **21** converts the analog sound signal received from the D/A converter **20** into the sound and outputs the resulting sound. The sound-outputting portion 21 includes an amplifier (not shown), the speaker **7,** the headphone terminal **8,** and the like.

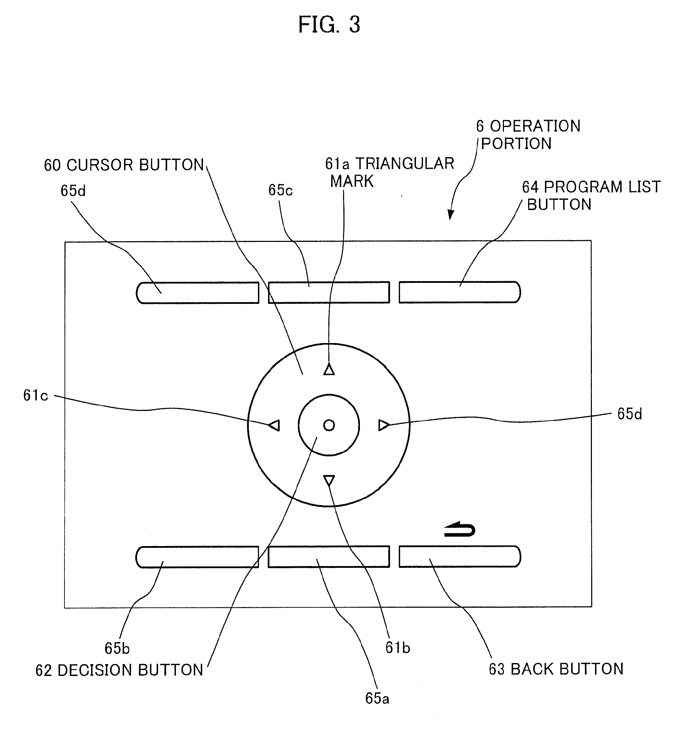

**FIG. 3** shows details of the operation portion **6.** The operation portion **6** includes a doughnut-like cursor button **60** having triangular marks **61a** to **61d** provided vertically and horizontally on its surface, a circular decision button **62** provided inside the cursor button **60,** a slender back button **63,** a program list button **64,** and other buttons **65a** to **65d.** The cursor button **60,** the decision button **62,** the back button **63,** and the program list button **64** will be described later. In **FIG. 3,** reference numeral 65a designates a stop button for stop of the reproduction of the recorded data, reference numeral **65b** designates a button for display of information on a data information service, reference numeral **65c** designates a button for display of a memo list recorded in the memory card, and reference numeral **65d** designates a quick/setting button for display of a quick menu and a setting menu.

### (Operation of Receiving Apparatus 1)

Next, an operation of the receiving apparatus **1** will be described in detail with reference to **FIGS. 1** to **7.**

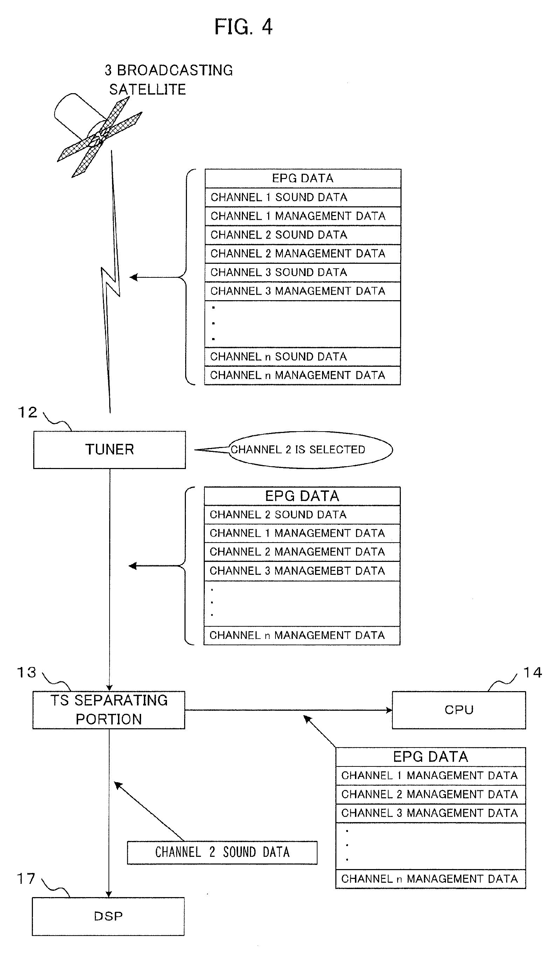

**FIG. 4** shows a flow of the digital program-broadcasting signal. Broadcasting electric waves, about television programs and radio programs, which have been transmitted from the broadcasting base station **2** reach the receiving apparatus **1** via the broadcasting satellite **3.** The receiving apparatus **1** receives the broadcasting electric waves from the broadcasting station at the antenna **11.** The broadcasting electric wave received at the antenna **11** contains the digital program broadcasting signal having EPG data, sound data (or video data) of n channels, management data, and the like. At that, in **FIG. 4,** illustration of the video data is omitted.

The user depresses the program list button **64** of the operation portion **6** to select a television program or a radio program to which he/she desires to see and listen. In this case, it is assumed that the radio program is selected.

The tuner **12** outputs the EPG data, the sound data of a channel (e.g., a channel **2)** selected by operating the operation portion **6,** the management data on n channels among the digital program broadcasting signal received at the antenna **11** to the TS data-separating portion **13.**

The TS data separating portion **13** separates the digital program broadcasting signal from the tuner **12** into sound data and management information data having the EPG data and the management data, and delivers the sound data and the management information data to the DSP **17** and the CPU **14,** respectively.

The CPU **14** stores the management information data delivered thereto in the internal storing portion **16,** and generates a sound reception picture in accordance with the management information data. In addition, the CPU **14** updates the management information data stored in the internal storing portion **16** every lapse of a given period of time (e.g., several seconds). Even when the user sees and listens to a program of a certain one channel, the receiving apparatus **1** receives the digital program broadcasting signals at all times. Hence, the digital program broadcasting signals of the channels other than the channel of the program to which the user sees and listens can also be acquired on a real-time basis. Also, the management information data stored in the internal storing portion **16** can be updated at an appropriate time.

### (1) Generation of Sound Reception Image

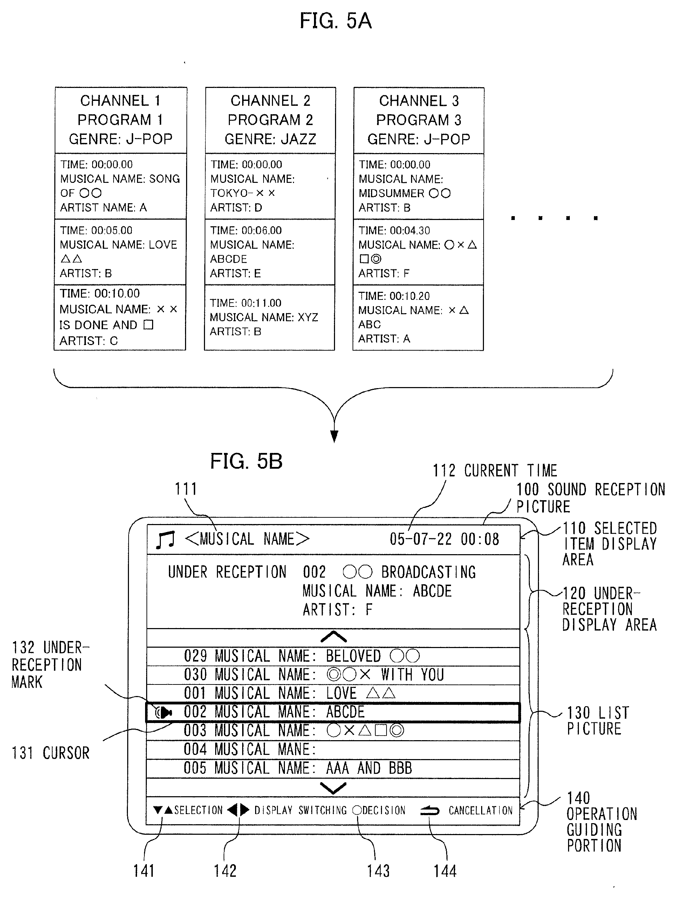

**FIGS. 5A** and 5B are respectively diagrams explaining generation of a sound reception image. The management information data received by the CPU **14** consists of program information such as a channel number, a name of a broadcasting station, a program name, broadcasting time, and a genre, and program element information having items such as musical performance start time, a musical name, and an artist name. As shown in **FIG. 5A,** the CPU **14** reads out the management information data such as a channel number, a program name, a genre, performance start time, a musical name, and an artist name (information on a piece of music) from the internal storing portion 16 every channel. Also, the CPU **14** generates a sound reception picture as shown in **FIG. 5B,** and displays the sound reception picture thus generated on the displaying portion **19.**

**FIG. 5B** shows an example of the sound reception picture. A selected item display area **110,** an under-reception display area **120,** a list picture **130,** and an operation guiding portion **140** are displayed in this order from the upper part in the sound reception picture **100.**

An item **111** such as a selected musical name and an artist name, and the current time **112** are displayed on the selected item display area **110.** The selection of the item will be described later.

The under-reception display area **120** is an area in which the management information data on the channel currently received is displayed. The management information data displayed in the under-reception display area **120** contains a channel number, a name of a broadcasting station, a musical name, an artist name, and the like.

The management information data on a predetermined number of channels containing the channel currently received, a cursor **131** fixedly provided at a center of the list picture **130,** and an under-reception mark **132** representing that the channel is being currently received are displayed in the list picture **130.** In the case shown in the figure, a state is shown in which a channel **(002)** is selected, its management information data is displayed in the under-reception display area **120,** and the management information data on seven channels **(029, 030,** and **001** to **005)** is displayed in the list picture **130.**

In addition, in the case shown in **FIG. 5B,** the management information data displayed in the list picture **130** is the channel number and the musical name. The management information data displayed in the list picture **130** is adapted to be scrolled by operating the cursor button **60.** Thus, the management information data more than can be displayed in the list picture **130** can be displayed and confirmed through the scrolling operation.

Selection **141** of the received channel, display switching **142** of a display mode, decision **143** of the selected received channel, and cancellation **143** for turning the selected received channel back to the channel selected last time are displayed in the operation-guiding portion **140.** The functions are performed by operating the buttons of the operation portion 6 corresponding to these kinds of display, respectively.

### (2) Selection of Piece of Music

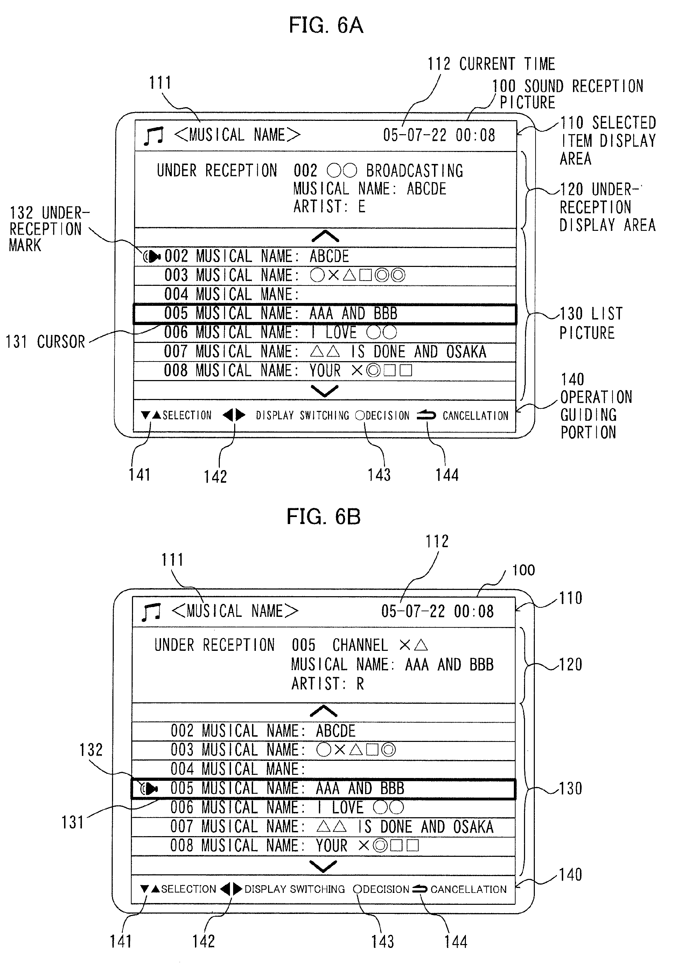

**FIGS. 6A** and **6B** are respectively diagrams explaining selection of a piece of music. The list picture **130** is vertically scrolled by depressing the triangular marks **61a** and **61b** which are vertically provided of the cursor button **60** shown in **FIG. 3** in correspondence to the selection **141** of the operation-guiding portion **140** to locate the display portion of the desired channel in the position of the cursor **131.** Thereafter, the desired received channel can be selected and received by depressing the decision button **62** corresponding to the decision **143.** For example, when intending to switch a channel **(002)** being currently received over to a channel **(005),** the user scrolls upward the list picture **130** as shown in **FIG. 6A** by operating the cursor button **60** to move the display position of the channel **(005)** to the position of the cursor **131,** and depresses the decision button **62.** Then, as shown in **FIG. 6B,** the under-reception mark **132** moves to the display position of the channel **(005),** so that the management information data on the channel **(005)** is displayed in the under-reception display area **120,** and the program sound on the channel **(005)** is generated through the sound outputting portion **21.**

### (3) Switching of Displayed Item

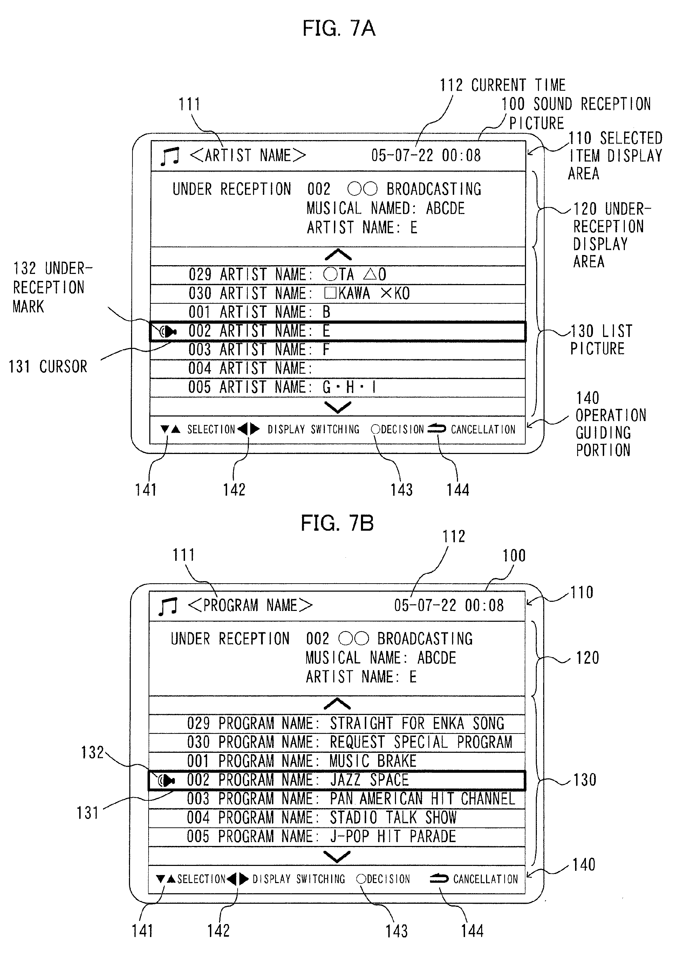

**FIGS. 7A** and **7B** are respectively diagrams explaining the switching of the displayed item. The item to be displayed in the list picture **130** is switched by depressing the triangular marks **61c** and **61d** which are horizontally provided of the cursor button **60** corresponding to the display switching **142.** The item to be displayed in the list picture **130** can be selected among the items such as a musical name, an artist name, a program name, and a next program name. When the current item is switched over to the artist name, the displayed contents as shown in **FIG. 7A** are obtained, while when the current item is switched over to the program name, the displayed contents as shown in **FIG. 7B** are obtained. Thus, when the item is switched over to another one, the item **111** displayed in the selected item display area **110** is also changed. Incidentally, the switching of the item may also be automatically made at intervals of several seconds for example in addition to the relaying on the manual operation. As a result, it is possible to make the switching operation unnecessary.

### (Effects of Embodiment)

According to this embodiment, even when the broadcasting of a certain one channel is being received, the user grasps the musical names and the artist names in the programs which are broadcasted through the channels other than the channel being received. Hence, it is prevented that the user misses listening to the piece of music which he/she wants to enjoy because he/she does not know that these pieces of music are being broadcasted from another broadcasting station. In addition, since the sound reception channels of the digital broadcastings are classified into the genres for the time being, the user can select the channel of the genre which he/she wants to enjoy. However, the pieces of music belonging to the same genre may be broadcasted through a plurality of channels depending on the contents of the programs. Thus, when the user makes the channel switching for the artist who is to his/her taste, he/she may listen to the program which further suits his/her taste.

### (Other Sound Reception Picture)

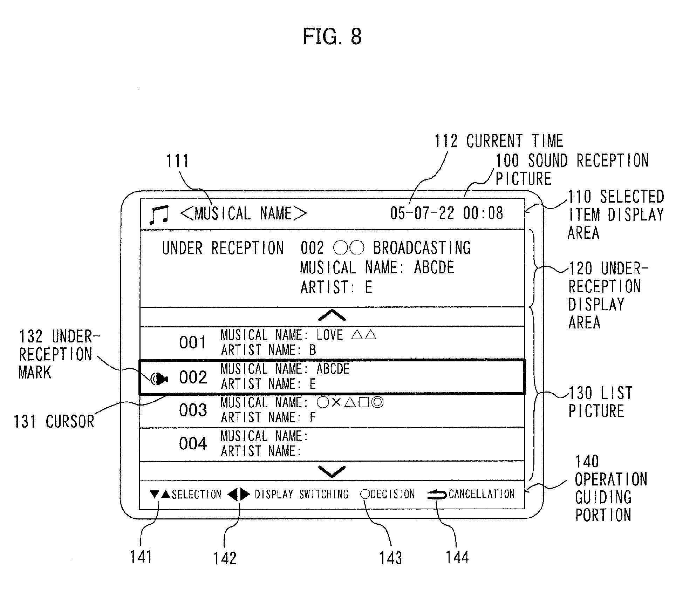

**FIG. 8** shows another example of a sound reception picture. A sound reception picture shown in **FIG. 8** is different only in list picture 130 from those shown in **FIGS. 5A** and **5B, FIGS. 6A** and **6B,** and **FIGS. 7A** and **7B,** but identical in other constrictions to those shown in **FIGS. 5A** and **5B, FIGS. 6A** and **6B,** and **FIGS. 7A** and **7B.** The management information data displayed in the list picture **130** is a musical name, and an artist name. In this example, the information for four channels is displayed at a time. In addition, in the list picture 130, information on a musical name, and an artist name is updated at an appropriate time in accordance with the information which is received at all times.

Such a sound reception picture is displayed, whereby the user can simultaneously confirm the musical names and the artist names of other channels. Hence, the user can readily confirm what pieces of music who sings in other channels while listening to the current musical program.

It should be noted that the present invention is not limited to the above-mentioned embodiment, and thus the various changes can be implemented without departing from the gist of the invention. For example, while in the above-mentioned embodiment, the radio broadcasting programs have been described so far, the invention can also be similarly applied to the television broadcasting programs.

## Claims

1. A receiving apparatus comprising:
a receiving portion for receiving program element information on a plurality of programs currently broadcasted;
a displaying portion for displaying thereon element information on a program currently seen and listened, and simultaneously element information on programs not currently seen and listened in a form of a list, respectively, in accordance with the program element information received from the receiving portion; and
a display controlling portion for updating and displaying the element information displayed on the displaying portion at an appropriate time.

2. The receiving apparatus according to claim 1, wherein:
the receiving portion receives program element information on a plurality of musical programs currently broadcasted;
the displaying portion displays thereon element information, containing a broadcasting station, a musical name, and an artist name, on a musical program currently seen and listened, and at least one of a musical name, an artist name, and a program name from element information on a musical program not currently seen and listened in a form of a list, and
the display controlling portion, when the element information displayed in the form of the list is updated, switches displayed element information and displays the updated element information at an appropriate time.

3. The receiving apparatus according to claim **1**, wherein:
the display controlling portion displays a predetermined mark for the element information, corresponding to a program currently seen and listened, among the element information displayed in the form of the list.

4. The receiving apparatus according to claim **2**, wherein:
the display controlling portion selects the at least one of the musical name, the artist name, and the program name and displays the at least one thus selected on the display portion in accordance with an instruction supplied from the outside.

5. The receiving apparatus according to claim **1**, wherein:
the display controlling portion periodically changes the element information displayed in the form of the'list on the displaying portion.

6. The receiving apparatus according to claim **1**, wherein:
the display controlling portion scrolls and displays the element information list displayed in the form of the list on the displaying portion.

7. The receiving apparatus according to claim **1**, wherein:
the receiving portion receives a video signal or a sound signal of a program selected among a plurality of programs currently broadcasted.
